# FASCICULE DE BREVET EUROPEEN

(11) **EP 4 609 061 B1**
(45) Date de publication et mention de la délivrance du brevet: **02.12.2026**
(21) Numéro de dépôt: 23817178.9
(22) Date de dépôt: 20.10.2023
(51) Int. Cl.: F01D 25/28

(54) **DISPOSITIF DE SUSPENSION D'UN ÉQUIPEMENT POUR TURBOMACHINE À UNE STRUCTURE MOTEUR DE TURBOMACHINE**
VORRICHTUNG ZUR AUFHÄNGUNG EINES AUSRÜSTUNGSTEILS FÜR EINE TURBOMASCHINE AN EINER TURBOMASCHINENMOTORSTRUKTUR
SUSPENSION DEVICE FOR SUSPENDING AN ITEM OF EQUIPMENT FROM AN ENGINE STRUCTURE OF A TURBOMACHINE

(30) Priorité: 28.10.2022 FR 2211328; 28.10.2022 FR 2211327
(43) Date de publication de la demande: 03.09.2025
(73) Titulaire: Safran Helicopter Engines, 64510 Bordes (FR)
(72) Inventeur: CHRISTOPHE, Antoine, Bernard, 77550 MOISSY-CRAMAYEL (FR); PACCINI, Mathieu, Michel, Jean-Baptiste, 77550 MOISSY-CRAMAYEL (FR); TROUILHET, Vincent, 77550 MOISSY-CRAMAYEL (FR); MILLET, Boris, Jean, René, 77550 MOISSY-CRAMMAYEL (FR)
(74) Mandataire: Ernest Gutmann - Yves Plasseraud S.A.S.
(86) Numéro de dépôt international: PCT/FR2023/051645
(87) Numéro de publication internationale: WO 2024/089345

(56) Documents cités:
- FR-A1- 2 978 985
- US-A1- 2022 205 391

## Description

### Domaine technique

La présente description se rapporte à un ensemble comprenant une structure moteur de turbomachine, au moins un équipement et un dispositif de suspension pour la suspension de l'équipement à la structure moteur.

### Technique antérieure

Un moteur d'avion ou d'hélicoptère comprend une turbomachine entourée par un carter qui peut porter un ou plusieurs équipements par exemple un échangeur de chaleur ou des équipements électriques tels que des unités de calcul, de commande et/ou de puissance, chacun de ces équipements étant fixé sur le carter au moyen d'un dispositif de suspension.

Il existe un risque de détachement de ces équipements, ce qui constitue un évènement critique, car ces équipements relativement lourds peuvent à leur tour venir percuter et détruire le carter et/ou détruire des éléments nécessaires à l'intégrité du moteur ou de l'aéronef.

L'invention a pour but d'apporter une solution assurant une sécurité accrue (dite « fail-safe » en anglais) et un assemblage aisé. Le document FR2978985 divulgue un dispositif de suspension d'un équipement à une structure moteur de turbomachine au moyen de plusieurs bielles de support selon l'art antérieure.

### Résumé

Selon la revendication 1, il est proposé un ensemble comprenant une structure moteur de turbomachine s'étendant selon un premier axe, au moins un équipement et un dispositif de suspension pour la suspension de l'équipement à la structure moteur en étant déporté suivant la direction d'au moins un deuxième axe perpendiculaire au premier axe, le dispositif de suspension comprenant :
- au moins six bielles de support reliant de manière isostatique l'équipement à la structure moteur ;
- au moins une bielle de sûreté reliant l'équipement à la structure moteur, la bielle de sûreté étant configurée pour présenter un chargement mécanique inférieur à un chargement mécanique de chacune des bielles de support. D'autres modes de réalisation sont définis dans les revendications dépendantes.

Ainsi, en cas de défaillance de l'une des bielles de support, la bielle de sûreté participe mécaniquement à la suspension de l'équipement à la structure moteur en évitant tout mouvement substantiel de l'équipement par rapport à la structure moteur et une surcharge mécanique des autres bielles de support. Le dispositif présente donc une sécurité accrue avec redondance (« fail-safe » selon la terminologie anglaise).

En l'absence de défaillance des bielles de support, les contraintes mécaniques exercées sur la bielle de sûreté restent inférieures ou égales à 50% des contraintes mécaniques exercées sur les bielles de support. En d'autres termes, la bielle de sûreté peut être différenciée des bielles de support en ce qu'une contrainte maximale exercée sur la bielle de sûreté est inférieure ou égale à 50% d'une contrainte maximale exercée sur chacune des bielles de support.

La structure moteur peut comprendre au moins un carter, une première ferrure moteur et une deuxième ferrure moteur, la première ferrure moteur et la deuxième ferrure moteur étant chacune reliées au carter, la bielle de sûreté reliant la première ferrure moteur à un premier point d'attache supérieur équipement de l'équipement.

Lesdites au moins six bielles de support peuvent comprendre :
- une première bielle de support et une deuxième bielle de support reliant la première ferrure moteur à un premier point d'attache inférieur équipement de l'équipement, la première bielle de support et la deuxième bielle de support présentant un axe de bielle respectif formant un angle ;
- une troisième bielle de support et une quatrième bielle de support reliant la deuxième ferrure moteur à un deuxième point d'attache inférieur équipement de l'équipement, la troisième bielle de support et la quatrième bielle de support présentant un axe de bielle respectif formant un angle ;
- une cinquième bielle de support reliant la deuxième ferrure moteur à un deuxième point d'attache supérieur équipement de l'équipement
- une sixième bielle de support reliant la deuxième ferrure moteur au premier point d'attache inférieur équipement.

Un tel agencement des six bielles de support permet de fixer les six degrés de liberté de l'équipement par rapport à la structure moteur.

La première ferrure moteur et la deuxième ferrure moteur peuvent globalement s'étendre selon la direction du premier axe. La première ferrure moteur et la deuxième ferrure moteur peuvent comprendre une pluralité d'ouvertures conformées pour éviter la propagation de fissures ou de criques.

Chaque point d'attache équipement peut être agencé au niveau d'une ferrure équipement respective. Alternativement, chaque premier point d'attache équipement peut être agencé au niveau d'une première ferrure équipement et chaque deuxième point d'attache équipement peut être agencé au niveau d'une deuxième ferrure équipement.

La première bielle de support peut être reliée à la première ferrure moteur au niveau d'un premier point d'attache supérieur moteur et la deuxième bielle de support est reliée à la première ferrure moteur au niveau d'un premier point d'attache inférieur moteur, le premier point d'attache supérieur moteur, le premier point d'attache inférieur moteur et le premier point d'attache inférieur équipement formant un premier triangle. La troisième bielle de support peut être reliée à la deuxième ferrure moteur au niveau d'un deuxième point d'attache supérieur moteur et la quatrième bielle de support est reliée à la deuxième ferrure moteur au niveau d'un deuxième point d'attache inférieur moteur, le deuxième point d'attache supérieur moteur, le deuxième point d'attache inférieur moteur et le deuxième point d'attache inférieur équipement formant un deuxième triangle.

Le premier point d'attache supérieur moteur, le premier point d'attache inférieur moteur et le premier point d'attache inférieur équipement définissent un premier plan et le deuxième point d'attache supérieur moteur, le deuxième point d'attache inférieur moteur et le deuxième point d'attache inférieur équipement définissent un deuxième plan, le premier plan et le deuxième plan étant sécants, de préférence en formant un angle inférieur ou égal à 30°.

Un tel agencement permet d'éviter un mouvement substantiel de l'équipement en cas de défaillance de la sixième bielle de support.

L'angle entre le premier plan et le deuxième plan peut être défini par l'angle aigu formé entre un vecteur normal du premier plan et un vecteur normal du deuxième plan. Le premier plan peut être parallèle à un plan comprenant le premier axe et le deuxième axe. Une droite marquant l'intersection entre le premier plan et le deuxième plan peut s'étendre selon la direction du deuxième axe. Cela permet ainsi un mouvement substantiel de l'équipement selon la direction d'un troisième axe perpendiculaire au premier axe et au deuxième axe, en cas de défaillance de la sixième bielle de support.

L'axe de bielle de la première bielle de support et l'axe de bielle de la deuxième bielle de support peuvent être coplanaires dans le premier plan. L'axe de bielle de la troisième bielle de support et l'axe de bielle de la quatrième bielle de support peuvent être coplanaires dans le deuxième plan.

Le premier point d'attache supérieur moteur et le premier point d'attache inférieur moteur peuvent être alignés selon la direction du premier axe. Le deuxième point d'attache supérieur moteur peut être décalé par rapport au deuxième point d'attache inférieur moteur dans la direction d'un troisième axe perpendiculaire au premier axe et au deuxième axe, de préférence encore selon une distance supérieure à 10 mm, de préférence encore selon une distance égale à 33 mm. Le deuxième point d'attache inférieur moteur peut être plus proche selon la direction du troisième axe du premier point d'attache inférieur moteur que le deuxième point d'attache supérieur moteur par rapport au premier point d'attache supérieur moteur. Autrement dit encore, le deuxième point d'attache supérieur moteur et le deuxième point d'attache inférieur moteur ne sont pas alignés selon la direction du premier axe.

Un tel décalage participe à la reprise des efforts selon la direction du troisième axe par les paires de bielles comprenant respectivement d'une part la première bielle de support et la deuxième bielle de support et d'autre part la troisième bielle de support et la quatrième bielle de support en cas de défaillance de la sixième bielle de support.

Le deuxième point d'attache supérieur moteur et le deuxième point d'attache inférieur moteur peuvent être chacun écartés du premier point d'attache supérieur moteur et du premier point d'attache inférieur moteur selon la direction d'un troisième axe perpendiculaire au premier axe et au deuxième axe, de préférence le deuxième point d'attache supérieur moteur et le deuxième point d'attache inférieur moteur étant alignés respectivement avec le premier point d'attache supérieur moteur et le premier point d'attache inférieur moteur selon la direction du troisième axe.

Le deuxième point d'attache supérieur équipement et le deuxième point d'attache inférieur équipement peuvent être chacun écartées du premier point d'attache supérieur équipement et du premier point d'attache inférieur équipement selon la direction d'un troisième axe perpendiculaire au premier axe et au deuxième axe, de préférence le deuxième point d'attache supérieur équipement et le deuxième point d'attache inférieur équipement étant alignées respectivement avec le premier point d'attache supérieur équipement et le premier point d'attache inférieur équipement selon la direction du troisième axe.

La première ferrure moteur et la deuxième ferrure moteur peuvent chacune s'étendre entre une première extrémité et une seconde extrémité selon la direction du premier axe, la première ferrure moteur et la deuxième ferrure moteur étant chacune fixées au carter au niveau de leur première extrémité respective et dans lequel la structure moteur comprend :
- une première bielle de liaison reliée à une première extrémité au carter et reliée à une seconde extrémité à la seconde extrémité de la première ferrure moteur,
- une deuxième bielle de liaison reliée à une première extrémité au carter et reliée à une seconde extrémité à la seconde extrémité de la deuxième ferrure moteur.

La seconde extrémité de la première ferrure moteur et la seconde extrémité de la deuxième ferrure moteur peuvent ainsi être agencées à distance du carter de la structure moteur, ce qui permet d'écarter davantage les premier et deuxième points d'attache moteur inférieurs par rapport aux premier et deuxième points d'attache moteur supérieurs selon la direction du troisième axe.

La bielle de sûreté peut être reliée à l'équipement ou à la structure moteur par au moins une liaison élastique autorisant un déplacement entre la bielle de sûreté et respectivement l'équipement ou la structure moteur, de préférence selon la direction d'un axe de bielle selon lequel s'étend la bielle de sûreté.

La compression de la liaison élastique autorise un déplacement limité entre la bielle de sûreté et respectivement l'équipement ou la structure moteur. Cela permet un montage de la bielle de sûreté en évitant que le dispositif de suspension soit hyperstatique et en même temps en évitant que la bielle de sûreté soit soumise à des déplacements importants qui pourraient entrainer une usure prématurée de celle-ci. L'assemblage du dispositif de suspension est par ailleurs facilité.

La bielle de sûreté peut comprendre un corps intermédiaire de forme allongée et au moins une tête de liaison au niveau d'une extrémité du corps intermédiaire, la tête de liaison comprenant un orifice dans lequel est reçue une rotule, la tête de liaison étant intercalée entre des oreilles d'une chape de la structure moteur ou de l'équipement et retenue à celles-ci par un arbre du dispositif de suspension qui traverse la rotule de la tête de liaison et un orifice à travers chaque oreille de la chape.

La liaison élastique peut comprendre au moins une paire de bagues élastiques montées serrées respectivement dans l'orifice de l'une des oreilles de la chape de manière à ce que l'arbre traverse chacune des bagues élastiques, chacune des bagues élastiques étant en outre réalisée dans un matériau moins rigide qu'un matériau dans lequel est réalisé l'arbre correspondant.

Ainsi, chaque bague élastique peut être déformée (notamment en compression) lorsque la tête de liaison correspondante exerce un effort sur celle-ci, autorisant ainsi un déplacement limité de la tête de fixation de la bielle de sûreté.

Chaque bague élastique peut être réalisée en un matériau présentant un faible coefficient de Young, par exemple compris entre 0.001 GPa et 0,1 GPa. Chaque bague élastique peut être réalisée en élastomère ou en caoutchouc, ou encore en une mousse métallique, en un treillis ou ressort métallique ou en une autre structure métallique compacte présentant une élasticité. Alternativement, la bague élastique peut être réalisée en un matériau présentant un coefficient de Young inférieur à 10 GPa, et de préférence choisi pour que la bielle de sûreté présente un mode vibratoire en dehors de la plage vibratoire de la structure moteur. La bielle de sûreté peut être réalisée en un matériau métallique.

Chaque bague élastique peut être solidarisée à l'oreille correspondante de la chape, notamment selon la direction de l'arbre. Chaque bague élastique peut comporter, de chaque côté selon la direction de l'arbre, un rebord annulaire externe d'appui sur une face latérale de l'oreille correspondante de la chape.

La tête de liaison peut donc être agencée dans la direction d'extension de l'arbre entre les bagues élastiques.

Chaque bielle (i.e. bielle de support et bielle de sureté) peut comporter un corps intermédiaire de forme allongée. Chaque bielle peut comporter une tête de liaison au niveau de chaque extrémité du corps intermédiaire. Chaque tête de liaison peut être assemblée ou formée d'une seule pièce avec le corps intermédiaire. Chaque tête de liaison peut comporter un orifice et une rotule reçue à l'intérieur l'orifice, une surface interne de l'orifice associé pouvant servir de guide à la rotule.

Chaque tête de liaison peut être montée entre des oreilles d'une chape. Selon l'extrémité de la bielle, la chape peut être formée par la structure moteur ou l'équipement. En particulier, la structure moteur et l'équipement peuvent comprendre une chape au niveau de chaque point d'attache respectif. Chaque chape peut être formée respectivement par l'une des ferrures moteur ou l'une des ferrures équipement.

Chaque tête de liaison peut être maintenue entre les oreilles par un arbre respectif du dispositif de suspension qui traverse un orifice à travers chaque oreille de la chape correspondante et la rotule. La rotule peut être sertie sur l'arbre. L'arbre peut être par ailleurs solidarisé aux oreilles, par exemple par un écrou qui coopère avec une portion filetée de l'arbre. Une paire de douilles peut être montée serrée dans l'orifice de chaque oreille ou dans l'une des bagues élastiques le cas échéant de manière à ce que l'arbre traverse chacune des douilles. La rotule de la bielle peut être en appui de chaque côté dans la direction de l'arbre contre les douilles de manière à être immobilisée dans la direction d'extension de l'arbre. La tête de liaison de chaque bielle peut ainsi pivoter librement autour de l'axe d'extension de l'arbre et de tout axe perpendiculaire à celui-ci dans les limites de butées définies par l'environnement, notamment par l'espacement entre les oreilles de la chappe femelle ou le cas échéant entre les bagues de la liaison élastique.

Chaque bielle présente un axe de bielle respectif. Le corps intermédiaire de chaque peut s'étendre selon l'axe de bielle respectif. L'axe de bielle de chaque bielle peut passer par le point d'attache moteur et le point d'attache équipement correspondant de la bielle.

Les arbres pour la liaison de chacune des têtes de liaison de la première bielle de support, de la deuxième bielle de support, de la troisième bielle de support, de la quatrième bielle de support, de la cinquième bielle de support et de la bielle de sûreté peuvent s'étendre chacun selon la direction du troisième axe. Les arbres pour la liaison de chacune des têtes de liaison de la sixième bielle peuvent s'étendre chacun selon la direction du premier axe.

### Brève description des dessins

D'autres caractéristiques, détails et avantages apparaîtront à la lecture de la description détaillée ci-après, et à l'analyse des dessins annexés, sur lesquels :
Figure 1 représente une vue schématique d'un ensemble comprenant une structure moteur de turbomachine, un équipement et un dispositif de suspension selon la présente description ;
Figure 2 représente une vue en perspective du dispositif de suspension de la figure 1 ;
Figure 3 représente une vue partielle en perspective du dispositif de suspension de la figure 2 ; illustrant notamment une bielle de sûreté du dispositif de suspension ;
Figure 4 représente une vue partielle en coupe du dispositif de suspension de la figure 2 ; illustrant notamment un système de fixation auquel se raccorde une extrémité d'une bielle de sûreté du dispositif de suspension.

### Description des modes de réalisation

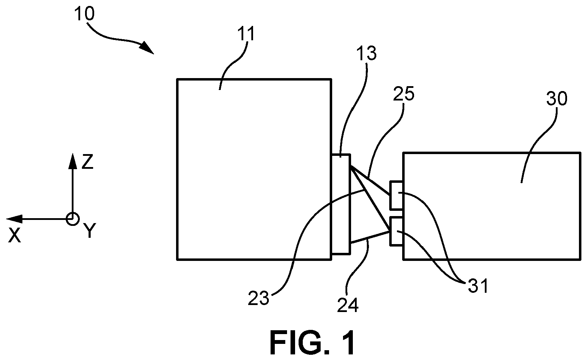

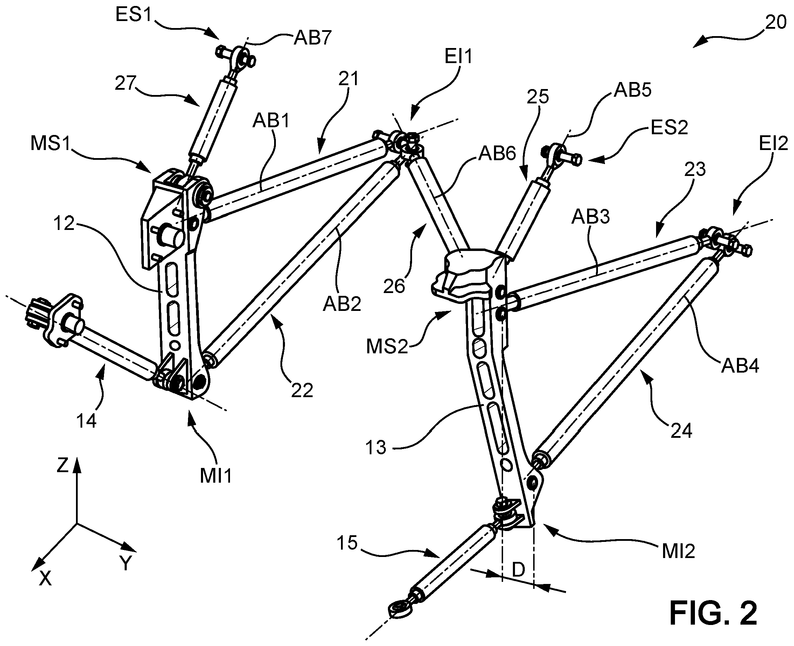

Il est maintenant fait référence aux figures 1 et 2 qui représentent un ensemble comprenant une structure moteur 10 pour turbomachine et un équipement 30 suspendu à la structure moteur 10. La structure moteur 10 s'étend selon un premier axe Z qui est un axe longitudinal de la turbomachine, c'est-à-dire un axe de rotation des parties tournantes (arbres, compresseur(s), turbine(s)) qui composent le générateur de gaz de la turbomachine. Dans l'exemple de la configuration représentée, le premier axe Z s'étend verticalement, mais une inclinaison de l'axe longitudinal de la turbomachine jusqu'à 90° par rapport à la verticale reste possible. La structure moteur 10 comprend ici un carter 11, une première ferrure moteur 12 et une deuxième ferrure moteur 13. La première ferrure moteur 12 et la deuxième ferrure moteur 13 sont destinées à la suspension de l'équipement 30 tel que décrit ci-après. La première ferrure moteur 12 et la deuxième ferrure moteur 13 sont chacune solidaires du carter 11. Le carter 11 peut comprendre une première partie entourant une partie propulsive de la turbomachine et une deuxième partie entourant une boite de vitesse de la turbomachine. La première ferrure moteur 12 peut être fixée à la première partie du carter 11 et la deuxième ferrure moteur 13 peut être fixée à la deuxième partie du carter 11. L'équipement 30 peut par exemple être un échangeur de chaleur. L'équipement 30 peut notamment comporter un corps externe par lequel l'équipement 30 est relié à la structure moteur 10.

L'équipement 30 est suspendu à la structure moteur 10 en étant déporté suivant la direction d'un deuxième axe X perpendiculaire au premier axe Z. Pour ce faire, l'ensemble comprend un dispositif de suspension 20. Le deuxième axe X peut correspondre à un axe de roulis d'un aéronef sur lequel l'ensemble est monté (un hélicoptère par exemple). Selon le déplacement de l'aéronef, la direction du deuxième axe X peut correspondre à la direction d'avancement vers l'avant de l'aéronef. Dans ce cas particulier, l'axe Z peut correspondre à un axe de lacet de l'aéronef, et dont la direction, dans ce cas, coïncide avec la direction du champ de pesanteur terrestre (i.e. l'axe Z coïncide avec un axe vertical).

Comme plus particulièrement visible à la figure 2, la structure moteur 10 comprend un premier point d'attache supérieur moteur MS1 et un deuxième point d'attache supérieur moteur MS2 écartées l'un de l'autre au moins selon la direction d'un troisième axe Y perpendiculaire au premier axe Z et au deuxième axe X. La première ferrure moteur 12 et la deuxième ferrure moteur 13 sont écartées l'une de l'autre au moins selon la direction du troisième axe Y. De manière remarquable dans l'exemple illustré, le premier point d'attache supérieur moteur MS1 et le deuxième point d'attache supérieur moteur MS2 sont alignées selon la direction du troisième axe Y. La structure moteur 10 comprend aussi un premier point d'attache inférieur moteur MI1 et un deuxième point d'attache inférieur moteur MI2 écartées l'un de l'autre au moins selon la direction du troisième axe Y et écartées respectivement du premier point d'attache supérieur moteur MS1 et du deuxième point d'attache supérieur moteur MS2 au moins selon la direction du premier axe X. De manière remarquable dans l'exemple illustré, le premier point d'attache inférieur moteur MI1 et le deuxième point d'attache inférieur moteur MI2 sont alignées selon la direction du troisième axe Y.

Le premier point d'attache supérieur moteur MS1 et le premier point d'attache inférieur moteur MI1 sont agencés au niveau de la première ferrure moteur 12 et le deuxième point d'attache supérieur moteur MS2 et le deuxième point d'attache inférieur moteur MI2 sont agencés au niveau de la deuxième ferrure moteur 13.

La première ferrure moteur 12 et la deuxième ferrure moteur 13 sont chacune fixées, ici par boulonnage, au carter 11 au niveau d'une première extrémité respective. La structure moteur 10 comprend par ailleurs d'une part une première bielle de liaison 14 reliée à une première extrémité au carter 11 et reliée à une seconde extrémité de la seconde ferrure moteur 12, et d'autre part une deuxième bielle de liaison 15 reliée à une première extrémité au carter 11 et reliée à une seconde extrémité de la deuxième ferrure moteur 13. La seconde extrémité de la première ferrure moteur 12 et la seconde extrémité de la deuxième ferrure moteur 13 sont ainsi agencées à distance du carter 11 de la structure moteur 10, ce qui permet d'écarter davantage les premier et deuxième points d'attache inférieurs moteur MI1, MI2 par rapport aux premier et deuxième points d'attache supérieurs moteur MS1, MS2 selon la direction du troisième axe Y.

De manière similaire, l'équipement 30 comprend un premier point d'attache supérieur équipement ES1 et un deuxième point d'attache supérieur équipement ES2 écartées l'un de l'autre au moins selon la direction du troisième axe Y. De manière remarquable dans l'exemple illustré, le premier point d'attache supérieur équipement ES1 et le deuxième point d'attache supérieur équipement ES2 sont alignées selon la direction du troisième axe Y. L'équipement 30 comprend aussi un premier point d'attache inférieur équipement EI1 et un deuxième point d'attache inférieur équipement EI2 écartées l'un de l'autre au moins selon la direction du troisième axe Y et écartées respectivement du premier point d'attache supérieur équipement ES1 et du deuxième point d'attache supérieur équipement ES2 au moins selon la direction du premier axe Z. De manière remarquable dans l'exemple illustré, le premier point d'attache inférieur équipement EI1 et le deuxième point d'attache inférieur équipement EI2 sont alignées selon la direction du troisième axe Y. Chaque point d'attache équipement 30 peut être agencé au niveau d'une ferrure équipement 31 respective.

Le dispositif de suspension 20 comprend tout d'abord six bielles de support reliant de manière isostatique l'équipement 30 à la structure moteur 10. En particulier, le dispositif de suspension 20 comprend :
- une première bielle de support 21 reliée à une première extrémité à la structure moteur 10 au niveau du premier point d'attache supérieur moteur MS1 et reliée à une seconde extrémité à l'équipement 30 au niveau du premier point d'attache inférieur équipement EI1 ;
- une deuxième bielle de support 22 reliée à une première extrémité à la structure moteur 10 au niveau du premier point d'attache inférieur moteur MI1 et reliée à une seconde extrémité à l'équipement 30 au niveau du premier point d'attache inférieur équipement EI1;
- une troisième bielle de support 23 reliée à une première extrémité à la structure moteur 10 au niveau du deuxième point d'attache supérieur moteur MS2 et reliée à une seconde extrémité à l'équipement 30 au niveau du deuxième point d'attache inférieur équipement EI2 ;
- une quatrième bielle de support 24 reliée à une première extrémité à la structure moteur 10 au niveau du deuxième point d'attache inférieur moteur MI2 et reliée à une seconde extrémité à l'équipement 30 au niveau du deuxième point d'attache inférieur équipement EI2 ;
- une cinquième bielle de support 25 reliée à une première extrémité à la structure moteur 10 au niveau du deuxième point d'attache supérieur moteur MS2 et reliée à une seconde extrémité à l'équipement 30 au niveau du deuxième point d'attache supérieur équipement ES2 ;
- une sixième bielle de support 26 reliée à une première extrémité à la structure moteur 10 au niveau du deuxième point d'attache supérieur moteur MS2 et reliée à une seconde extrémité à l'équipement 30 au niveau du premier point d'attache inférieur équipement EI1.

Un tel agencement permet ainsi de fixer les six degrés de liberté de l'équipement 30 par rapport à la structure moteur 10.

Le dispositif comprend en outre une bielle de sûreté 27 reliant l'équipement 30 à la structure moteur 10. Néanmoins, la bielle de sûreté 27 est configurée pour présenter un chargement mécanique inférieur à un chargement mécanique de chacune des bielles de support. Ainsi, en cas de défaillance de l'une des bielles de support (par exemple en cas de rupture de l'une des bielles de support), la bielle de sûreté 27 est alors engagée mécaniquement de sorte qu'elle participe mécaniquement à la suspension de l'équipement 30 à la structure moteur 10 en évitant tout mouvement substantiel de l'équipement 30 par rapport à la structure moteur 10 et une surcharge mécanique des autres bielles de support. Le dispositif présente donc une sécurité accrue avec redondance (« fail-safe » selon la terminologie anglaise). Par exemple, les contraintes mécaniques exercées sur la bielle de sûreté 27 lorsqu'elle est en attente (i.e. lorsqu'elle ne participe pas activement à la suspension de l'équipement 30) peuvent être inférieures ou égales à 50%, et préférablement à 40%, des contraintes mécaniques exercées sur les bielles de support.

Selon l'exemple illustrée, la bielle de sécurité est reliée à une première extrémité à la structure moteur 10 au niveau du premier point d'attache supérieur moteur MS1 et reliée à une seconde extrémité à l'équipement 30 au niveau du premier point d'attache supérieur équipement ES1.

Il est défini par ailleurs un premier plan passant par le premier point d'attache supérieur moteur MS1, le premier point d'attache inférieur moteur MI1 et le premier point d'attache inférieur équipement EI1, et il est défini un deuxième plan passant par le deuxième point d'attache supérieur moteur MS2, le deuxième point d'attache inférieur moteur MI2 et le deuxième point d'attache inférieur équipement EI2 forment un deuxième plan. Le premier plan est parallèle à un plan comprend le premier axe Z et le deuxième axe X.

Chaque bielle (bielle de support et bielle de sûreté) présente un axe de bielle AB1, AB2, AB3, AB4, AB5, AB6, AB7 respectif. L'axe de bielle de chaque bielle passe par le point d'attache moteur et le point d'attache équipement 30 correspondant de la bielle. L'axe de bielle de chacune des bielles s'étend selon une direction comprenant au moins une composante selon la direction du deuxième axe X. Aussi, l'axe de bielle AB1 de la première bielle de support 21 et l'axe de bielle AB2 de la deuxième bielle de support 22 sont ici coplanaires dans le premier plan. De même, l'axe de bielle AB3 de la troisième bielle de support 23 et l'axe de bielle AB4 de la quatrième bielle de support 24 sont ici coplanaires dans le deuxième plan.

En particulier :
- la direction de l'axe de bielle AB1 de la première bielle de support 21 comprend une composante selon la direction du premier axe Z et une composante selon la direction du deuxième axe X ; i.e. elle ne comprend pas de composante selon la direction du troisième axe Y ;
- la direction de l'axe de bielle AB2 de la deuxième bielle de support 22 comprend une composante selon la direction du premier axe Z et une composante selon la direction du deuxième axe X ; i.e. elle ne comprend pas de composante selon la direction du troisième axe Y ;
- la direction de l'axe de bielle AB3 de la troisième bielle de support 23 comprend une composante selon la direction du premier axe Z et une composante selon la direction du deuxième axe X ; i.e. elle ne comprend pas de composante selon la direction du troisième axe Y ;
- la direction de l'axe de bielle AB4 de la quatrième bielle de support 24 comprend une composante selon la direction du premier axe Z, une composante selon la direction du deuxième axe X et une composante selon la direction du troisième axe Y ;
- la direction de l'axe de bielle AB5 de la cinquième bielle de support 25 comprend une composante selon la direction du premier axe Z et une composante selon la direction du deuxième axe X ;
- la direction de l'axe de bielle AB6 de la sixième bielle de support 26 comprend une composante selon la direction du deuxième axe X, une composante selon la direction du troisième axe Y, et préférablement une composante selon la direction du premier axe Z ;
- la direction de l'axe de bielle AB7 de la bielle de sûreté 27 comprend une composante selon la direction du premier axe Z et une composante selon la direction du deuxième axe X.

Ainsi, l'axe de bielle AB1 de la première bielle de support 21 et l'axe de bielle AB2 de la deuxième bielle de support 22 forment un angle (non nul). En d'autres termes, l'axe de bielle AB1 de la première bielle de support 21 et l'axe de bielle AB2 de la deuxième bielle de support 22 sont coplanaires et ne sont pas parallèles entre eux. De même, l'axe de bielle AB3 de la troisième bielle de support 23 et l'axe de bielle AB4 de la quatrième bielle de support 24 forment un angle (non nul), i.e. l'axe de bielle AB3 de la troisième bielle de support 23 et l'axe de bielle AB4 de la quatrième bielle de support 24 sont coplanaires et ne sont pas parallèles entre eux.

Selon un autre aspect de la présente description, le premier plan et le deuxième plan sont sécants. Une droite formée par l'intersection du premier plan et du deuxième plan s'étend ici selon la direction du deuxième axe X. Un tel agencement permet d'éviter un mouvement substantiel de l'équipement 30 selon la direction du troisième axe Y en cas de défaillance (par exemple en cas de rupture) de la sixième bielle de support 26.

En particulier, le premier point d'attache supérieur moteur MS1 et le premier point d'attache inférieur moteur MI1 sont alignés selon la direction du premier axe Z et le deuxième point d'attache inférieur moteur MI2 est écarté du deuxième point d'attache supérieur moteur MS2 selon la direction du troisième axe Y, en direction du premier point d'attache supérieur moteur MS1 et le premier point d'attache inférieur moteur MI1, ici selon une distance D égale à 33 mm. Alternativement, la distance D peut être comprise entre 28 mm et 50 mm. Un tel décalage participe à la reprise des efforts selon la direction du troisième axe Y par les paires de bielles comprenant respectivement d'une part la première bielle de support 21 et la deuxième bielle de support 22 et d'autre part la troisième bielle de support 23 et la quatrième bielle de support 24 en cas de défaillance de la sixième bielle de support 26.

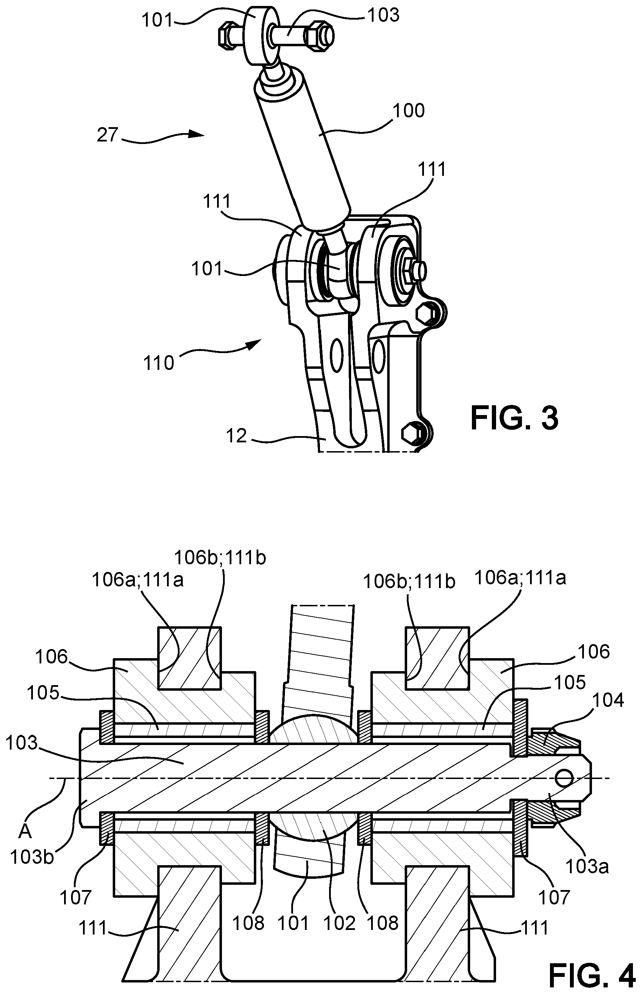

Il est maintenant fait référence aux figures 3 et 4 qui représentent plus en détail la bielle de sûreté 27. Dans ce qui suit, sauf précisions contraires, il est décrit chacune des bielles en référence aux figures 3 et 4.

Chaque bielle (i.e. bielle de support et bielle de sureté) comporte un corps intermédiaire 100 de forme allongée. Le corps intermédiaire 100 de chaque bielle s'étend selon l'axe de bielle respectif de la bielle. Chaque bielle comporte une tête de liaison 101 au niveau de chaque extrémité du corps intermédiaire 100. Chaque tête de liaison 101 est assemblée ou formée d'une seule pièce avec le corps intermédiaire 100.

Chaque tête de liaison 101 comporte un orifice et une rotule 102 reçue à l'intérieur de l'orifice, une surface interne de l'orifice associé pouvant servir de guide à la rotule 102. Chaque tête de liaison 101 est par ailleurs montée entre des oreilles 111 d'une chape 110. Selon l'extrémité de la bielle, la chape 110 peut être formée au niveau de la structure moteur 10 ou de l'équipement 30. En particulier, la structure moteur 10 et l'équipement 30 comprennent une chape 110 au niveau de chaque point d'attache respectif. Chaque chape 110 peut être formée respectivement par l'une des ferrures moteur 12, 13 ou l'une des ferrures équipement 31.

Chaque tête de liaison 101 est maintenue entre les oreilles 111 par un arbre 103 respectif qui s'étend selon un axe d'arbre A respectif. L'arbre 103 traverse un orifice à travers chaque oreille 111de la chape 110 correspondante et la rotule 102. La rotule 102 peut être sertie sur l'arbre 103. L'arbre 103 est par ailleurs solidarisé aux oreilles 111, par exemple par un écrou 104 qui coopère avec une portion filetée 103a de l'arbre 103.

Les arbres 103 pour la liaison de chacune des têtes de liaison 101 de la première bielle de support 21, de la deuxième bielle de support 22, de la troisième bielle de support 23, de la quatrième bielle de support 24, de la cinquième bielle de support 25 et de la bielle de sûreté 27 s'étendent chacun selon la direction du troisième axe Y. Les arbres 103 pour la liaison de chacune des têtes de liaison 101 de la sixième bielle 26 s'étendent chacun selon la direction du premier axe Z.

Une paire de douilles 105 peut être montée serrée dans l'orifice de chaque oreille 111 de manière à être montée autour de l'arbre 103. La rotule 102 de la bielle peut être en appui de chaque côté dans la direction de l'arbre 103 contre les douilles 105 de manière à être immobilisée dans la direction d'extension de l'arbre 103. La tête de liaison 101 de chaque bielle peut ainsi pivoter librement autour de l'axe d'extension A de l'arbre 103 et de tout axe perpendiculaire à celui-ci dans les limites de butées définies par l'environnement, notamment par l'espacement entre les oreilles 111 de la chape femelle.

De manière remarquable et comme représentée aux figures 3 et 4, la bielle de sûreté 27 est reliée à la structure moteur 10 par une liaison élastique autorisant un déplacement limité de la bielle de sûreté 27 par rapport à la structure moteur 10, notamment dans la direction de l'axe de bielle AB7 de la bielle de sûreté 27. Cela permet de faciliter le montage de la bielle de sûreté 27 en évitant que le dispositif de suspension 20 soit hyperstatique et en même temps en évitant que la bielle de sûreté 27 soit soumise à des déplacements importants lors du fonctionnement de la turbomachine, ce qui pourrait entrainer une usure prématurée de celle-ci.

La liaison élastique comprend une paire de bagues élastiques 106 montées serrées respectivement dans l'orifice de l'une des oreilles 111 de la chape 110 côté de la structure moteur 10 de manière à être montées autour de l'arbre 103 correspondant. En d'autres termes, chaque bague élastique est intercalée entre l'arbre 103 et le bord de l'orifice à travers l'oreille correspondante. Ici en l'occurrence, chacune des douilles 105 est montée serrée respectivement dans l'une des bagues élastiques 106. Chaque douille 105 est donc interposée entre la bague 105 correspondante et l'arbre 103. Aussi, la tête de liaison 101 est agencée dans la direction d'extension de l'arbre 103 entre les bagues élastiques 106. Ainsi, les limites de butées de la tête de liaison 101 sont ici définies par les bagues élastiques.

Chacune des bagues élastiques 106 est en outre réalisée dans un matériau moins rigide qu'un matériau dans lequel est réalisé l'arbre 103 correspondant. Chaque bague élastique 106 peut être réalisée en un matériau présentant un faible coefficient de Young, par exemple compris entre 0.001 GPa et 0,1 GPa. Par exemple, chaque bague élastique 106 peut être réalisée en élastomère ou en caoutchouc. Selon d'autres exemples, chaque bague élastique 106 peut être réalisée en une mousse métallique, en un treillis ou ressort métallique, ou en une autre structure métallique compacte présentant une élasticité. En comparaison, la bielle de sûreté 27 et/ou l'arbre 103 correspondant peuvent chacun être réalisés en un matériau métallique.

Ainsi, chaque bague élastique 106 peut être déformée en compression lorsque la tête de liaison 101 correspondante exerce un effort sur celle-ci, directement ou par l'intermédiaire de l'arbre, ce qui permet un déplacement de la tête de fixation de la bielle de sûreté 27.

En outre, chaque bague élastique 106 est solidarisée à l'oreille 111 correspondante de la chape 110, notamment selon la direction de l'arbre 103. Chaque bague élastique 106 comporte ici, de chaque côté selon la direction de l'arbre 103, un rebord annulaire externe d'appui 106a, 106b sur une face latérale 111a, 111b de l'oreille 111 correspondante de la chape 110.

Optionnellement, une première paire de rondelles 107 peuvent être montées respectivement entre une tête 103b de l'arbre 103 et l'une des bagues élastiques 106, et entre l'écrou 104 et l'autre des bagues élastiques 106. Optionnellement encore, une autre paire de rondelles 108 peuvent être montées entre chaque bague élastique et la rotule 102 pour serrer la rotule dans la direction de l'arbre 103.

## Revendications

1. Ensemble comprenant une structure moteur (10) de turbomachine s'étendant selon un premier axe (Z), au moins un équipement (30) et un dispositif de suspension (20) pour la suspension de l'équipement (30) à la structure moteur (10) en étant déporté suivant la direction d'au moins un deuxième axe (X) perpendiculaire au premier axe (Z), le dispositif de suspension (20) **caractérisé en ce qu'**il comprend:
- au moins six bielles de support (21 ; 22 ; 23 ; 24 ; 25 ; 26) reliant de manière isostatique l'équipement (30) à la structure moteur (10) ;
- au moins une bielle de sûreté (27) reliant l'équipement (30) à la structure moteur (10), la bielle de sûreté (27) étant configurée pour présenter un chargement mécanique inférieur à un chargement mécanique de chacune des bielles de support (21 ; 22 ; 23 ; 24 ; 25 ; 26).

2. Ensemble selon la revendication précédente, dans lequel la structure moteur (10) comprend au moins un carter (11), une première ferrure moteur (12) et une deuxième ferrure moteur (13), la première ferrure moteur (12) et la deuxième ferrure moteur (13) étant chacune reliées au carter (11), la bielle de sûreté (27) reliant la première ferrure moteur (12) à un premier point d'attache supérieur équipement (ES1) de l'équipement (30), et dans lequel lesdites au moins six bielles de support (21 ; 22 ; 23 ; 24 ; 25 ; 26) comprennent :
- une première bielle de support (21) et une deuxième bielle de support (22) reliant la première ferrure moteur (12) à un premier point d'attache inférieur équipement (EI1) de l'équipement (30), la première bielle de support (21) et la deuxième bielle de support (22) présentant un axe de bielle (AB1 ; AB2) respectif formant un angle ;
- une troisième bielle de support (23) et une quatrième bielle de support (24) reliant la deuxième ferrure moteur (13) à un deuxième point d'attache inférieur équipement (EI2) de l'équipement (30), la troisième bielle de support (23) et la quatrième bielle de support (24) présentant un axe de bielle (AB3 ; AB4) respectif formant un angle ;
- une cinquième bielle de support (25) reliant la deuxième ferrure moteur (13) à un deuxième point d'attache supérieur équipement (ES2) de l'équipement (30) ;
- une sixième bielle de support (26) reliant la deuxième ferrure moteur (13) au premier point d'attache inférieur équipement (EI1).

3. Ensemble selon la revendication précédente, dans lequel la première bielle de support (21) est reliée à la première ferrure moteur (12) au niveau d'un premier point d'attache supérieur moteur (MS1) et la deuxième bielle de support (22) est reliée à la première ferrure moteur (12) au niveau d'un premier point d'attache inférieur moteur (MI1), le premier point d'attache supérieur moteur (MS1), le premier point d'attache inférieur moteur (MI1) et le premier point d'attache inférieur équipement (EI1) formant un premier triangle, et dans lequel la troisième bielle de support (23) est reliée à la deuxième ferrure moteur (13) au niveau d'un deuxième point d'attache supérieur moteur (MS2) et la quatrième bielle de support (24) est reliée à la deuxième ferrure moteur (13) au niveau d'un deuxième point d'attache inférieur moteur (MI2), le deuxième point d'attache supérieur moteur (MS2), le deuxième point d'attache inférieur moteur (MI2) et le deuxième point d'attache inférieur équipement (EI2) formant un deuxième triangle.

4. Ensemble selon la revendication précédente, dans lequel le premier point d'attache supérieur moteur (MS1), le premier point d'attache inférieur moteur (MI1) et le premier point d'attache inférieur équipement (EI1) définissent un premier plan et le deuxième point d'attache supérieur moteur (MS2), le deuxième point d'attache inférieur moteur (MI2) et le deuxième point d'attache inférieur équipement (EI2) définissent un deuxième plan, le premier plan et le deuxième plan étant sécants, de préférence en formant un angle inférieur ou égal à 30°.

5. Ensemble selon la revendication 3 ou 4, dans lequel le premier le point d'attache supérieur moteur (MS1) et le premier point d'attache inférieur moteur (MI1) sont alignés selon la direction du premier axe (Z), et le deuxième point d'attache inférieur moteur (MI2) est décalé par rapport au deuxième point d'attache supérieur moteur (MS2) dans la direction d'un troisième axe (Y) perpendiculaire au premier axe (Z) et au deuxième axe (X), de préférence selon une distance supérieure à 10 mm, de préférence encore selon une distance comprise entre 28 mm et 50 mm.

6. Ensemble selon l'une quelconque des revendications 3 à 5, dans lequel le deuxième point d'attache supérieur moteur (MS2) et le deuxième point d'attache inférieur moteur (MI2) sont chacun écartées du premier point d'attache supérieur moteur (MS1) et du premier point d'attache inférieur moteur (MI1) selon la direction d'un troisième axe (Y) perpendiculaire au premier axe (Z) et au deuxième axe (X), de préférence le deuxième point d'attache supérieur moteur (MS2) et le deuxième point d'attache inférieur moteur (MI2) étant alignées respectivement avec le premier point d'attache supérieur moteur (MS1) et le premier point d'attache inférieur moteur (MI1) selon la direction du troisième axe (Y).

7. Ensemble selon l'une quelconque des revendications 2 à 6, dans lequel le deuxième point d'attache supérieur équipement (ES2) et le deuxième point d'attache inférieur équipement (EI2) sont chacun écartées du premier point d'attache supérieur équipement (ES1) et du premier point d'attache inférieur équipement (EI1) selon la direction d'un troisième axe (Y) perpendiculaire au premier axe (Z) et au deuxième axe (X), de préférence le deuxième point d'attache supérieur équipement (ES2) et le deuxième point d'attache inférieur équipement (EI2) étant alignées respectivement avec le premier point d'attache supérieur équipement (ES1) et le premier point d'attache inférieur équipement (EI1) selon la direction du troisième axe (Y).

8. Ensemble selon l'une quelconque des revendications 2 à 7, dans lequel la première ferrure moteur (12) et la deuxième ferrure moteur (13) s'étendent chacune entre une première extrémité et une seconde extrémité selon la direction du premier axe (Z), la première ferrure moteur (12) et la deuxième ferrure moteur (13) étant chacune fixées au carter (11) au niveau de leur première extrémité respective et dans lequel la structure moteur (10) comprend :
- une première bielle de liaison (14) reliée à une première extrémité au carter (11) et reliée à une seconde extrémité à la seconde extrémité de la première ferrure moteur (12),
- une deuxième bielle de liaison (15) reliée à une première extrémité au carter (11) et reliée à une seconde extrémité à la seconde extrémité de la deuxième ferrure moteur (13).

9. Ensemble selon l'une quelconque des revendications précédentes, dans lequel la bielle de sûreté (27) est reliée à l'équipement (30) ou à la structure moteur (10) par au moins une liaison élastique autorisant un déplacement entre la bielle de sûreté (27) et respectivement l'équipement (30) ou la structure moteur (10).

10. Ensemble selon la revendication précédente, dans lequel la bielle de sûreté (27) comprend un corps intermédiaire (100) de forme allongée et au moins une tête de liaison (101) au niveau d'une extrémité du corps intermédiaire (100), la tête de liaison (101) comprenant un orifice dans lequel est reçue une rotule (102), la tête de liaison (101) étant intercalée entre des oreilles (111) d'une chape (110) de la structure moteur (10) ou de l'équipement (30) et retenue à celles-ci par un arbre (103) du dispositif de suspension (20) qui traverse la rotule (102) de la tête de liaison (101) et un orifice à travers chaque oreille (111) de la chape (110), et
dans lequel la liaison élastique comprend au moins une paire de bagues élastiques (106), chacune des bagues élastiques (106) étant montée serrée dans l'orifice de l'une des oreilles (111) de la chape (110) de manière à être traversée par l'arbre (103) et étant en outre réalisée dans un matériau moins rigide qu'un matériau dans lequel est réalisé l'arbre (103) correspondant.

11. Ensemble selon la revendication précédente, dans lequel chaque bague élastique (106) peut être réalisée en un matériau présentant un coefficient de Young, par exemple compris entre 0.001 GPa et 0,1 GPa.

12. Ensemble selon la revendication 10 ou 11, dans lequel chaque bague élastique (106) est réalisée en élastomère ou en caoutchouc.

13. Ensemble selon l'une quelconque des revendications 10 à 12, dans lequel chaque bague élastique (106) est solidarisée à l'oreille (111) correspondante de la chape (110) selon la direction de l'arbre.

14. Ensemble selon la revendication précédente, dans lequel chaque bague élastique (106) comporte, de chaque côté selon la direction de l'arbre, un rebord annulaire externe d'appui (106a ; 106b) sur une face latérale (111a ; 111b) de l'oreille (111) correspondante de la chape (110).

## Patentansprüche

1. Anordnung, umfassend eine sich entlang einer ersten Achse (Z) erstreckende Motorbaugruppe (10) eines Triebwerks, zumindest ein Ausrüstungsteil (30) und eine Aufhängungsvorrichtung (20) zum Aufhängen des Ausrüstungsteils (30) an der Motorbaugruppe (10) mit Versatz in Richtung entlang zumindest einer zweiten Achse (X), die senkrecht zur ersten Achse (Z) verläuft, **dadurch gekennzeichnet, dass** die Aufhängungsvorrichtung (20) umfasst:
- zumindest sechs Stützstangen (21; 22; 23; 24; 25; 26), die das Ausrüstungsteil (30) isostatisch mit der Motorbaugruppe (10) verbinden;
- zumindest eine Sicherheitsstange (27), die das Ausrüstungsteil (30) mit der Motorbaugruppe (10) verbindet, wobei die Sicherheitsstange (27) so ausgelegt ist, dass sie einer geringeren mechanischen Belastung ausgesetzt ist als jede der Stützstangen (21; 22; 23; 24; 25; 26).

2. Anordnung nach dem vorstehenden Anspruch,
wobei die Motorbaugruppe (10) zumindest ein Gehäuse (11), eine erste Motorhalterung (12) und eine zweite Motorhalterung (13) umfasst, wobei die erste Motorhalterung (12) und die zweite Motorhalterung (13) jeweils mit dem Gehäuse (11) verbunden sind, wobei die Sicherheitsstange (27) die erste Motorhalterung (12) mit einem ersten oberen Ausrüstungsteilbefestigungspunkt (ES1) des Ausrüstungsteils (30) verbindet, und wobei die zumindest sechs Stützstangen (21; 22; 23; 24; 25; 26) umfassen:
- eine erste Stützstange (21) und eine zweite Stützstange (22), die die erste Motorhalterung (12) mit einem ersten unteren Ausrüstungsteilbefestigungspunkt (EI1) des Ausrüstungsteils (30) verbinden, wobei die erste Stützstange (21) und die zweite Stützstange (22) jeweils eine Stangenachse (AB1; AB2) aufweisen, die einen Winkel einschließen;
- eine dritte Stützstange (23) und eine vierte Stützstange (24), die die zweite Motorhalterung (13) mit einem zweiten unteren Ausrüstungsteilbefestigungspunkt (EI2) des Ausrüstungsteils (30) verbinden, wobei die dritte Stützstange (23) und die vierte Stützstange (24) jeweils eine Stangenachse (AB3; AB4) aufweisen, die einen Winkel einschließen;
- eine fünfte Stützstange (25), die die zweite Motorhalterung (13) mit einem zweiten oberen Ausrüstungsteilbefestigungspunkt (ES2) des Ausrüstungsteils (30) verbindet;
- eine sechste Stützstange (26), die die zweite Motorhalterung (13) mit dem ersten unteren Ausrüstungsteilbefestigungspunkt (EI1) verbindet.

3. Anordnung nach dem vorstehenden Anspruch,
wobei die erste Stützstange (21) an einem ersten oberen Motorbefestigungspunkt (MS1) mit der ersten Motorhalterung (12) verbunden ist und die zweite Stützstange (22) an einem ersten unteren Motorbefestigungspunkt (MI1) mit der ersten Motorhalterung (12) verbunden ist, wobei der erste obere Motorbefestigungspunkt (MS1), der erste untere Motorbefestigungspunkt (MI1) und der erste untere Ausrüstungsteilbefestigungspunkt (EI1) ein erstes Dreieck bilden, und wobei die dritte Stützstange (23) an einem zweiten oberen Motorbefestigungspunkt (MS2) mit der zweiten Motorhalterung (13) verbunden ist und die vierte Stützstange (24) an einem zweiten unteren Motorbefestigungspunkt (MI2) mit der zweiten Motorhalterung (13) verbunden ist, wobei der zweite obere Motorbefestigungspunkt (MS2), der zweite untere Motorbefestigungspunkt (MI2) und der zweite untere Ausrüstungsteilbefestigungspunkt (EI2) ein zweites Dreieck bilden.

4. Anordnung nach dem vorstehenden Anspruch,
wobei der erste obere Motorbefestigungspunkt (MS1), der erste untere Motorbefestigungspunkt (MI1) und der erste untere Ausrüstungsteilbefestigungspunkt (EI1) eine erste Ebene aufspannen und der zweite obere Motorbefestigungspunkt (MS2), der zweite untere Motorbefestigungspunkt (MI2) und der zweite untere Ausrüstungsteilbefestigungspunkt (EI2) eine zweite Ebene aufspannen, wobei sich die erste Ebene und die zweite Ebene schneiden und vorzugsweise einen Winkel kleiner oder gleich 30° einschließen.

5. Anordnung nach Anspruch 3 oder 4,
wobei der erste obere Motorbefestigungspunkt (MS1) und der erste untere Motorbefestigungspunkt (MI1) in Richtung entlang der ersten Achse (Z) fluchten, und der zweite untere Motorbefestigungspunkt (MI2) gegenüber dem zweiten oberen Motorbefestigungspunkt (MS2) in Richtung einer dritten Achse (Y) versetzt ist, die senkrecht zur ersten Achse (Z) und zur zweiten Achse (X) verläuft, vorzugsweise um einen Abstand von mehr als 10 mm, noch bevorzugter um einen Abstand zwischen 28 mm und 50 mm.

6. Anordnung nach einem der Ansprüche 3 bis 5,
wobei der zweite obere Motorbefestigungspunkt (MS2) und der zweite untere Motorbefestigungspunkt (MI2) jeweils in Richtung entlang einer dritten Achse (Y), die senkrecht zur ersten Achse (Z) und zur zweiten Achse (X) verläuft, von dem ersten oberen Motorbefestigungspunkt (MS1) und von dem ersten unteren Motorbefestigungspunkt (MI1) beabstandet sind, wobei vorzugsweise der zweite obere Motorbefestigungspunkt (MS2) und der zweite untere Motorbefestigungspunkt (MI2) jeweils mit dem ersten oberen Motorbefestigungspunkt (MS1) bzw. dem ersten unteren Motorbefestigungspunkt (MI1) in Richtung entlang der dritten Achse (Y) fluchten.

7. Anordnung nach einem der Ansprüche 2 bis 6,
wobei der zweite obere Ausrüstungsteilbefestigungspunkt (ES2) und der zweite untere Ausrüstungsteilbefestigungspunkt (EI2) jeweils in Richtung entlang einer dritten Achse (Y), die senkrecht zur ersten Achse (Z) und zur zweiten Achse (X) verläuft, von dem ersten oberen Ausrüstungsteilbefestigungspunkt (ES1) und von dem ersten unteren Ausrüstungsteilbefestigungspunkt (EI1) beabstandet sind, wobei vorzugsweise der zweite obere Ausrüstungsteilbefestigungspunkt (ES2) und der zweite untere Ausrüstungsteilbefestigungspunkt (EI2) jeweils mit dem ersten oberen Ausrüstungsteilbefestigungspunkt (ES1) bzw. dem ersten unteren Ausrüstungsteilbefestigungspunkt (EI1) in Richtung entlang der dritten Achse (Y) fluchten.

8. Anordnung nach einem der Ansprüche 2 bis 7,
wobei sich die erste Motorhalterung (12) und die zweite Motorhalterung (13) jeweils zwischen einem ersten Ende und einem zweiten Ende in Richtung entlang der ersten Achse (Z) erstrecken, wobei die erste Motorhalterung (12) und die zweite Motorhalterung (13) jeweils an ihrem jeweiligen ersten Ende am Gehäuse (11) befestigt sind und wobei die Motorbaugruppe (10) umfasst:
- eine erste Verbindungsstange (14), die an einem ersten Ende mit dem Gehäuse (11) und an einem zweiten Ende mit dem zweiten Ende der ersten Motorhalterung (12) verbunden ist,
- eine zweite Verbindungsstange (15), die an einem ersten Ende mit dem Gehäuse (11) und an einem zweiten Ende mit dem zweiten Ende der zweiten Motorhalterung (13) verbunden ist.

9. Anordnung nach einem der vorstehenden Ansprüche,
wobei die Sicherheitsstange (27) mit dem Ausrüstungsteil (30) oder mit der Motorbaugruppe (10) über zumindest eine elastische Verbindung verbunden ist, die eine Verlagerung zwischen der Sicherheitsstange (27) und dem Ausrüstungsteil (30) bzw. der Motorbaugruppe (10) zulässt.

10. Anordnung nach dem vorstehenden Anspruch,
wobei die Sicherheitsstange (27) einen länglichen Zwischenkörper (100) und zumindest einen Verbindungskopf (101) an einem Ende des Zwischenkörpers (100) umfasst, wobei der Verbindungskopf (101) eine Öffnung aufweist, in der ein Kugelgelenk (102) aufgenommen ist, und der Verbindungskopf (101) zwischen den Schenkeln (111) einer Gabel (110) der Motorbaugruppe (10) oder des Ausrüstungsteils (30) angeordnet und an diesen durch eine Welle (103) der Aufhängungsvorrichtung (20) gehalten wird, die sich durch das Kugelgelenk (102) des Verbindungskopfes (101) sowie durch eine Öffnung in jedem Schenkel (111) der Gabel (110) hindurch erstreckt, und
wobei die elastische Verbindung zumindest ein Paar Federringe (106) umfasst, wobei jeder der Federringe (106) fest in der Öffnung eines der Schenkel (111) der Gabel (110) sitzt, sodass er von der Welle (103) durchdrungen wird, und ferner aus einem Material hergestellt ist, das weniger steif ist als das Material, aus dem die entsprechende Welle (103) gefertigt ist.

11. Anordnung nach dem vorstehenden Anspruch,
wobei jeder Federring (106) aus einem Material hergestellt sein kann, das einen Elastizitätsmodul aufweist, der beispielsweise zwischen 0,001 GPa und 0,1 GPa liegt.

12. Anordnung nach Anspruch 10 oder 11,
wobei jeder Federring (106) aus Elastomer oder Gummi hergestellt ist.

13. Anordnung nach einem der Ansprüche 10 bis 12,
wobei jeder Federring (106) in Richtung entlang der Welle fest mit dem entsprechenden Schenkel (111) der Gabel (110) verbunden ist.

14. Anordnung nach dem vorstehenden Anspruch,
wobei jeder Federring (106) auf jeder Seite in Richtung entlang der Welle einen äußeren ringförmigen Auflageflansch (106a; 106b) aufweist, der an einer Seitenfläche (111a; 111b) des entsprechenden Schenkels (111) der Gabel (110) anliegt.

## Claims

1. Assembly comprising a turbomachine engine structure (10) extending along a first axis (Z), at least one equipment item (30), and a suspension device (20) for suspending the equipment item (30) from the engine structure (10) while being offset along the direction of at least a second axis (X) perpendicular to the first axis (Z), the suspension device (20) **characterized in that** it comprises:
- at least six support rods (21; 22; 23; 24; 25; 26) connecting the equipment item (30) to the engine structure (10) in a statically determinate manner;
- at least one safety rod (27) connecting the equipment item (30) to the engine structure (10), the safety rod (27) being configured to have a lower mechanical load than a mechanical load of each of the support rods (21; 22; 23; 24; 25; 26).

2. Assembly according to the preceding claim, wherein the engine structure (10) comprises at least a casing (11), a first engine bracket (12), and a second engine bracket (13), the first engine bracket (12) and the second engine bracket (13) each being connected to the casing (11), the safety rod (27) connecting the first engine bracket (12) to a first upper equipment attachment point (ES1) of the equipment item (30), and wherein said at least six support rods (21; 22; 23; 24; 25; 26) comprise:
- a first support rod (21) and a second support rod (22) connecting the first engine bracket (12) to a first lower equipment attachment point (EI1) of the equipment item (30), the first support rod (21) and the second support rod (22) each having a respective rod axis (AB1; AB2) which together form an angle;
- a third support rod (23) and a fourth support rod (24) connecting the second engine bracket (13) to a second lower equipment attachment point (EI2) of the equipment item (30), the third support rod (23) and the fourth support rod (24) each having a respective rod axis (AB3; AB4) which together form an angle;
- a fifth support rod (25) connecting the second engine bracket (13) to a second upper equipment attachment point (ES2) of the equipment item (30);
- a sixth support rod (26) connecting the second engine bracket (13) to the first lower equipment attachment point (EI1).

3. Assembly according to the preceding claim, wherein the first support rod (21) is connected to the first engine bracket (12) at a first upper engine attachment point (MS1) and the second support rod (22) is connected to the first engine bracket (12) at a first lower engine attachment point (MI1), the first upper engine attachment point (MS1), the first lower engine attachment point (MI1), and the first lower equipment attachment point (EI1) forming a first triangle, and wherein the third support rod (23) is connected to the second engine bracket (13) at a second upper engine attachment point (MS2) and the fourth support rod (24) is connected to the second engine bracket (13) at a second lower engine attachment point (MI2), the second upper engine attachment point (MS2), the second lower engine attachment point (MI2), and the second lower equipment attachment point (EI2) forming a second triangle.

4. Assembly according to the preceding claim, wherein the first upper engine attachment point (MS1), the first lower engine attachment point (MI1), and the first lower equipment attachment point (EI1) define a first plane, and the second upper engine attachment point (MS2), the second lower engine attachment point (MI2), and the second lower equipment attachment point (EI2) define a second plane, the first plane and second plane being secant, preferably forming an angle that is less than or equal to 30°.

5. Assembly according to claim 3 or 4, wherein the first upper engine attachment point (MS1) and the first lower engine attachment point (MI1) are aligned along the direction of the first axis (Z), and the second lower engine attachment point (MI2) is offset from the second upper engine attachment point (MS2) along the direction of a third axis (Y) perpendicular to the first axis (Z) and second axis (X), preferably by a distance greater than 10 mm, more preferably by a distance between 28 mm and 50 mm.

6. Assembly according to any one of claims 3 to 5, wherein the second upper engine attachment point (MS2) and the second lower engine attachment point (MI2) are each spaced apart from the first upper engine attachment point (MS1) and from the first lower engine attachment point (MI1), along the direction of a third axis (Y) perpendicular to the first axis (Z) and to the second axis (X), preferably the second upper engine attachment point (MS2) and the second lower engine attachment point (MI2) being respectively aligned with the first upper engine attachment point (MS1) and the first lower engine attachment point (MI1) along the direction of the third axis (Y).

7. Assembly according to any one of claims 2 to 6, wherein the second upper equipment attachment point (ES2) and the second lower equipment attachment point (EI2) are each spaced apart from the first upper equipment attachment point (ES1) and from the first lower equipment attachment point (EI1), along the direction of a third axis (Y) perpendicular to the first axis (Z) and to the second axis (X), preferably the second upper equipment attachment point (ES2) and the second lower equipment attachment point (EI2) being respectively aligned with the first upper equipment attachment point (ES1) and the first lower equipment attachment point (EI1) along the direction of the third axis (Y).

8. Assembly according to any one of claims 2 to 7, wherein the first engine bracket (12) and the second engine bracket (13) each extend between a first end and a second end along the direction of the first axis (Z), the first engine bracket (12) and the second engine bracket (13) each being fixed to the casing (11) at their respective first end, and wherein the engine structure (10) comprises:
- a first connecting rod (14) connected at a first end to the casing (11) and connected at a second end to the second end of the first engine bracket (12),
- a second connecting rod (15) connected at a first end to the casing (11) and connected at a second end to the second end of the second engine bracket (13).

9. Assembly according to any one of the preceding claims, wherein the safety rod (27) is connected to the equipment item (30) or to the engine structure (10) by at least one elastic connection enabling movement between the safety rod (27) and the respective equipment item (30) or engine structure (10).

10. Assembly according to the preceding claim, wherein the safety rod (27) comprises an intermediate body (100) of elongate shape and at least one connecting head (101) at one end of the intermediate body (100), the connecting head (101) comprising an orifice in which a ball joint (102) is received, the connecting head (101) being interposed between arms (111) of a clevis (110) of the engine structure (10) or of the equipment item (30) and retained therein by a shaft (103) of the suspension device (20) which passes through the ball joint (102) of the connecting head (101) and through an orifice traversing each arm (111) of the clevis (110), and
wherein the elastic connection comprises at least one pair of elastic rings (106), each of the elastic rings (106) being tightly fitted into the orifice of one of the arms (111) of the clevis (110) so as to be traversed by the shaft (103), and further being made of a less rigid material than a material from which the corresponding shaft (103) is made.

11. Assembly according to the preceding claim, wherein each elastic ring (106) may be made of a material having a Young's modulus that is, for example, between 0.001 GPa and 0.1 GPa.

12. Assembly according to claim 10 or 11, wherein each elastic ring (106) is made of elastomer or rubber.

13. Assembly according to any one of claims 10 to 12, wherein each elastic ring (106) is secured to the corresponding arm (111) of the clevis (110) along the direction of the shaft.

14. Assembly according to the preceding claim, wherein each elastic ring (106) comprises, on each side along the direction of the shaft, an external annular rim (106a; 106b) for bearing against a lateral face (111a; 111b) of the corresponding arm (111) of the clevis (110).
